# DEMANDE DE BREVET EUROPEEN

(11) **EP 4 570 932 A1**
(43) Date de publication de la demande: **18.06.2025**
(21) Numéro de dépôt: 24219602.0
(22) Date de dépôt: 12.12.2024
(51) Int. Cl.: C22B 3/44, C01G 9/00, C01G 51/00, C07F 3/06, C22B 3/00, H01M 6/52, H01M 10/54

(54) **PROCÉDÉ D EXTRACTION DU ZINC D'UNE SOLUTION POLYMÉTALLIQUE**

(30) Priorité: 13.12.2023 FR 2314101
(71) Demandeur: Commissariat à l'Energie Atomique et aux Energies Alternatives, 75015 Paris (FR)
(72) Inventeur: ANDRIOTOU, Despoina, 38054 GRENOBLE CEDEX 09 (FR); PERALTA, David, 38054 GRENOBLE CEDEX 09 (FR)
(74) Mandataire: Brevalex

(57) **Abrégé**

L'invention se rapporte à un procédé d'extraction du zinc à partir d'une solution S1 comprenant du zinc et au moins un élément métallique autre que le zinc et le cobalt, lequel procédé est caractérisé en ce qu'il comprend au moins les étapes suivantes :
a) réaction entre le zinc et au moins un ligand choisi parmi l'imidazole et ses dérivés par mise en contact de la solution S1 avec le(s) ligand(s), moyennant quoi un précipité à structure imidazolate zéolithique est obtenu ;
b) récupération du précipité.

Elle se rapporte aussi à un procédé de préparation d'un oxyde du zinc, en mettant en oeuvre ledit procédé d'extraction.

Applications : traitement et recyclage de matériaux usagés comprenant du zinc, par exemple recyclage d'une pile alcaline usagée en vue de recycler le zinc.

## Description

### DOMAINE TECHNIQUE

La présente invention se rapporte au domaine de l'extraction du zinc.

Plus spécifiquement, l'invention se rapporte à un procédé d'extraction du zinc d'une solution polymétallique, aqueuse ou organique.

Elle se rapporte également à un procédé de préparation d'un oxyde de zinc qui met en oeuvre ce procédé d'extraction.

L'invention trouve notamment application dans le traitement et le recyclage de matériaux usagés comprenant du zinc en vue de son recyclage. Par exemple, l'invention peut trouver application dans le recyclage de piles alcalines usagées.

Elle trouve également application dans les domaines d'utilisation de particules d'un oxyde de zinc, tels que la préparation de produits cosmétiques et de crèmes solaires.

### ÉTAT DE LA TECHNIQUE ANTÉRIEURE

Depuis quelques années, la demande en zinc ne cesse d'augmenter. Cet élément métallique représente, à ce jour, l'un des métaux les plus consommés en raison, notamment, de ses propriétés chimiques extrêmement intéressantes.

Le zinc est utilisé dans de nombreux secteurs tels que celui de l'électronique où il est l'un des éléments essentiels dans certains composants de dispositifs électroniques comme les piles alcalines, le secteur de la pharmacie et le secteur de l'automobile. Il est également utilisé dans la fabrication de différents produits chimiques, notamment en tant que pigments pour les peintures ou en tant que stabilisateur pour des matières plastiques telles que le PVC.

De par ces multiples applications, la question de la récupération du zinc à partir de matériaux usagés le comprenant est devenue primordiale, en particulier pour pallier aux problèmes d'approvisionnement et de l'épuisement progressif des ressources naturelles en zinc.

Aussi, un certain nombre de recherches ont-elles été menées sur l'extraction du zinc à partir de solutions polymétalliques.

Par exemple, il a été proposé par S. Rao et al. (Hydrometallurgy 2019, 183, 38-44, ci-après référence [1]), d'extraire du zinc, du gallium et du germanium à partir de résidus d'une raffinerie de zinc, ces résidus comprenant, outre ces éléments, du plomb, du fer et du silicium.

L'extraction de ces trois éléments - zinc, gallium et germanium - est réalisée en mettant en oeuvre deux étapes successives de lixiviation du résidu, chacune réalisée pendant 4 heures à 80 °C :
- une première étape de lixiviation du résidu par de l'acide sulfurique à une concentration de 2 mol/L, permettant d'extraire sélectivement le zinc à une hauteur de 93 % et le gallium à environ 100 % ; puis
- une deuxième étape de lixiviation du résidu par de l'hydroxyde de sodium à une concentration de 1 mol/L, permettant d'extraire le germanium à une hauteur de 90 %.

Bien que le procédé proposé par S. Rao et al. permette une extraction satisfaisante du zinc, ce procédé ne permet d'extraire sélectivement le zinc puisqu'il est extrait en même temps qu'une importante quantité de gallium.

Par ailleurs, il a été proposé par W-S Chen et al. (Energy Procedia 2017, 107, 167-174, ci-après référence **[2]**) un procédé de récupération de zinc et de manganèse à partir d'une solution aqueuse polymétallique, laquelle solution est issue de la lixiviation d'une poudre d'électrode de batterie Zn-MnO₂ usagée par de l'acide sulfurique.

La récupération du zinc et du manganèse, décrite dans la référence **[2]**, est réalisée en faisant précipiter successivement ces deux éléments. Pour ce faire, la solution aqueuse polymétallique subit un ajustement de pH à une valeur au moins égale à 13, permettant la précipitation sélective du manganèse sous la forme d'hydroxyde de manganèse. Ce précipité est récupéré puis la solution aqueuse polymétallique subit un second ajustement de pH à une valeur, cette fois-ci, égale à 10, permettant la précipitation sélective du zinc sous la forme d'hydroxyde de zinc, qui est ensuite aussi récupéré. Chacun des précipités récupérés est calciné pour obtenir respectivement du dioxyde de manganèse et de l'oxyde de zinc.

Au vu de ce qui précède, les inventeurs se sont fixé pour objectif de proposer un nouveau procédé permettant d'extraire très efficacement le zinc à partir d'une solution polymétallique, aqueuse ou organique.

Par ailleurs, les inventeurs se sont également fixé pour objectif que ce procédé soit facile à mettre en oeuvre et soit peu coûteux.

### EXPOSÉ DE L'INVENTION

Aussi, l'invention a-t-elle, en premier lieu pour objet, un procédé d'extraction du zinc à partir d'une solution S1 comprenant du zinc et au moins un élément métallique autre que le zinc et le cobalt, lequel procédé est caractérisé en ce qu'il comprend au moins les étapes suivantes :
a) réaction entre le zinc et au moins un ligand choisi parmi l'imidazole et ses dérivés par mise en contact de la solution S1 avec le(s) ligand(s), moyennant quoi un précipité à structure imidazolate zéolithique est obtenu ; et
b) récupération du précipité.

Grâce à la mise en oeuvre du procédé d'extraction de l'invention, les Inventeurs ont constaté une excellente extraction du zinc et, plus particulièrement, une extraction sélective du zinc de la solution S1.

Ceci est notamment possible grâce à l'orientation tétraédrique que le zinc adopte avec le(s) ligand(s) de type imidazole, contrairement aux autres éléments métalliques qui, eux, restent en solution.

Le procédé de l'invention permet donc, d'une part, d'extraire très efficacement le zinc d'une solution polymétallique et, d'autre part, d'extraire le zinc sous la forme d'un matériau d'intérêt, i.e. à structure imidazolate zéolithique.

Un matériau à structure imidazolate zéolithique - plus simplement appelé ZIF (pour *« Zeolitic Imidazolate Framework* » en anglais) - représente une sous-classe des MOFs (pour « *Metal-Organic-Framework* » en anglais) et sont notamment utiles pour la séparation, l'adsorption et/ou le stockage de gaz, la catalyse et plus spécifiquement la photocatalyse, la fabrication de dispositifs électroniques, de capteurs chimiques et de sondes luminescentes ou encore pour la préparation d'un oxyde de zinc.

Les ZIFs sont constitués d'un assemblage régulier et tridimensionnel d'entités organiques et inorganiques, formé par itération de centres métalliques (plus précisément de cations métalliques) reliés entre eux par l'intermédiaire de ligands qui établissent des liaisons de coordination avec ces centres métalliques.

Plus spécifiquement, les ZIFs sont constitués d'un assemblage d'unités tétraédriques au centre desquelles se trouve un cation métallique divalent qui est lié à quatre atomes d'azote - chacun provenant d'un ligand imidazolate - représentant les quatre sommets des tétraèdres. Les tétraèdres sont connectés entre eux par leurs sommets, c'est-à-dire que chaque ligand est partagé entre deux tétraèdres.

Aussi, le précipité formé à l'issue de l'étape a) présente une structure imidazolate zéolithique dans laquelle le zinc est lié à un(des) ligand(s) de type imidazole *via* des liaisons de coordination.

Conformément à l'invention, l'élément ou les éléments métalliques autres que le zinc et le cobalt peuvent notamment être des métaux de transition. En particulier, il peut s'agir du manganèse et/ou du nickel.

Par ailleurs, le ou les ligands répondent préférentiellement à la formule (I) ci-après : 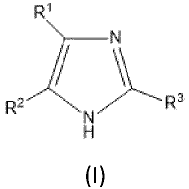 dans laquelle :
- R¹ et R² représentent, indépendamment l'un de l'autre, un atome d'hydrogène, un groupe alkyle linéaire ou ramifié en C₁ à C₄, un atome d'halogène, un groupe nitro ou un groupe amino, ou bien R¹ et R² forment ensemble un groupe phényle éventuellement substitué une ou plusieurs fois ; et
- R³ représente un atome d'hydrogène, un groupe alkyle linéaire ou ramifié en C₁ à C₄, un atome d'halogène, un groupe nitro ou un groupe amino.

On précise que l'on entend :
- par « *groupe alkyle linéaire ou ramifié en C₁ à C₄* », tout groupe alkyle (i.e. de formule CₙH₂ₙ₊₁) comprenant 1, 2, 3 ou 4 atomes de carbone et dont la chaîne, dans le cas où il est en C₄, peut être linéaire ou comprendre une ramification ; et
- par « *un groupe phényle éventuellement substitué une ou plusieurs fois »,* un groupe phényle dont l'atome d'hydrogène porté par un ou plusieurs atomes de carbone du cycle est remplacé par un substituant tel qu'un atome d'halogène, un groupe alkyle linéaire ou ramifié en Ci-à C₄, un groupe nitro ou un groupe amino.

Plus particulièrement, lorsque R¹, R² et/ou R³ représentent un groupe alkyle linéaire ou ramifié en C₁ à C₄, ils peuvent être choisis, indépendamment les uns des autres, parmi un groupe méthyle et un groupe éthyle.

Aussi, dans la formule (I) ci-avant, on préfère que :
- R¹ et R² représentent, indépendamment l'un de l'autre, un atome d'hydrogène, un groupe méthyle, un groupe éthyle, un atome d'halogène, un groupe nitro ou un groupe amino, ou bien R¹ et R² forment ensemble un groupe phényle ; et
- R³ représente un atome d'hydrogène, un groupe méthyle, un groupe éthyle, un atome d'halogène, un groupe nitro ou un groupe amino.

Plus particulièrement, on préfère que :
- R¹ et R² représentent un atome d'hydrogène ou bien que R¹ et R² forment ensemble un groupe phényle ; et
- R³ représente un atome d'hydrogène, un groupe méthyle ou un groupe éthyle.

Mieux encore, le ou les ligands sont choisis de préférence parmi :
- le ligand répondant à la formule (I) ci-avant, dans laquelle R¹, R² et R³ représentent tous un atome d'hydrogène (ce composé est dénommé imidazole) ;
- le ligand répondant à la formule (I) ci-avant, dans laquelle R¹ et R² forment ensemble un groupe phényle et R³ représente un atome d'hydrogène (ce composé est dénommé benzimidazole) ; ou
- le ligand répondant à la formule (I) ci-avant, dans laquelle R¹ et R² représentent tous les deux un atome d'hydrogène tandis que R³ représente un groupe méthyle (ce composé est dénommé 2-méthylimidazole).

Plus spécifiquement, lorsque la solution S1 comprend, outre le zinc, du manganèse et/ou du nickel (voire lorsque la solution S1 comprend exclusivement du zinc, du nickel et du manganèse), le ou les ligands particulièrement efficaces pour l'extraction sélective du zinc sont ceux correspondant au benzimidazole et au 2-méthylimidazole.

Par ailleurs, conformément à l'invention, le zinc, dans la solution S1, peut être sous la forme d'un sulfate, d'un nitrate ou d'un chlorure de zinc. De préférence, le zinc est sous la forme d'un sulfate ou d'un nitrate de zinc et, mieux encore, d'un sulfate de zinc.

Selon une première variante de réalisation, le zinc, dans la solution S1, est sous la forme d'un sulfate de zinc, auquel cas cette solution S1 est avantageusement une solution aqueuse.

Selon une deuxième variante de réalisation, le zinc, dans la solution S1, est sous la forme d'un nitrate de zinc, auquel cas cette solution S1 est avantageusement une solution organique, par exemple, une solution alcoolique telle qu'une solution méthanolique.

Quoi qu'il en soit, conformément à l'invention, le ou les ligands décrits ci-dessus sont utilisés en une quantité nécessaire pour permettre la formation du précipité dans la solution S1.

De préférence, à l'étape a), le rapport molaire zinc/ligand(s) est compris entre 1/1 et 1/25.

Aussi, préalablement à la mise en contact de la solution S1 et du ou des ligand(s) - soit préalablement à l'étape a) - une étape de détermination de la concentration en zinc dans la solution S1 peut avantageusement être mise en oeuvre pour estimer la quantité de ligand(s) nécessaire pour obtenir la formation du précipité, tout en évitant d'utiliser une quantité trop importante de ce(s) ligand(s).

Cette étape de détermination peut être réalisée au moyen de toute méthode connue de l'art antérieur permettant la détermination d'une telle concentration. Par exemple, les méthodes de spectroscopie d'émission optique à plasma à couplage inductif (ICP-OES), de spectrométrie d'absorption atomique (SAA) ou encore de spectroscopie de masse à plasma à couplage inductif (ICP-MS) peuvent être mises en oeuvre.

Préférentiellement, l'étape a) est réalisée sous agitation, à une température comprise entre 20 °C et 80 °C, par exemple à 40 °C et pendant plusieurs heures, par exemple, entre 6 heures et 12 heures. Ainsi, le procédé d'extraction de l'invention présente l'avantage d'être peu énergivore et donc peu coûteux.

Conformément à l'invention, l'étape b) visant à récupérer le précipité peut être réalisée par toute technique de séparation solide-liquide connue, par exemple par filtration, notamment sous vide, ou centrifugation, et peut être suivie, si nécessaire, d'une étape visant à sécher les particules, par exemple en étuve.

Finalement, le procédé d'extraction peut s'inscrire, avantageusement, dans le cadre global du recyclage d'un matériau usagé comprenant du zinc, par exemple une pile alcaline usagée.

Aussi, le procédé d'extraction du zinc tel que décrit ci-avant, est avantageusement mis en oeuvre pour extraire, puis récupérer le zinc présent dans la solution S1, laquelle peut, lorsque cette solution S1 est une solution aqueuse, être issue de la lixiviation (ou attaque) acide (par exemple par de l'acide sulfurique) d'un matériau usagé qui comprend du zinc tel qu'une pile alcaline usagée.

Par ailleurs, dans le cas où la solution S1 est une solution organique, elle peut notamment être obtenue après évaporation de l'eau d'une solution aqueuse issue de la lixiviation décrite ci-dessus, et après ajout d'un solvant organique tel que du méthanol.

Comme précisé précédemment, le précipité récupéré peut être destiné à différentes applications, notamment celle de la préparation d'un oxyde de zinc.

Aussi, l'invention a-t-elle, en deuxième lieu, pour objet un procédé de préparation d'un oxyde de zinc, lequel procédé comprend les étapes suivantes :
i) une étape d'extraction du zinc à partir d'une solution S1 comprenant du zinc et au moins un élément métallique autre que le zinc et le cobalt, par la mise en oeuvre du procédé d'extraction tel que défini précédemment ; puis
ii) une étape de calcination du précipité récupéré à l'issue de l'étape b) dudit procédé d'extraction.

L'étape ii) est avantageusement réalisée à une température comprise entre 600 °C et 1 000 °C et ce, sous une atmosphère oxydante, typiquement de l'air.

D'autres caractéristiques et avantages de l'invention ressortiront du complément de description qui suit et qui se réfère aux figures annexées.

Il va de soi que ce complément de description n'est donné qu'à titre d'illustration de l'objet de l'invention et ne doit en aucun cas être interprété comme une limitation de cet objet.

### BRÈVE DESCRIPTION DES FIGURES

Les figures 1, 2 et 3 illustrent le diffractogramme de rayons X (DRX) du précipité récupéré respectivement à l'issue de trois extractions différentes par la mise en oeuvre du procédé d'extraction de l'invention, chacune de ces extractions utilisant du benzimidazole comme ligand et, à titre de comparaison, le DRX théorique d'un ZIF-7-III.
Les figures 4, 5 et 6 illustrent le DRX d'un oxyde de zinc obtenu à partir des précipités récupérés respectivement à l'issue de trois extractions utilisant du benzimidazole comme ligand et, à titre de comparaison, le DRX théorique de l'oxyde de zinc.
Les figures 7, 8 et 9 illustrent le DRX du précipité récupéré respectivement à l'issue de trois autres extractions différentes par la mise en oeuvre du procédé d'extraction de l'invention, chacune de ces extractions utilisant du 2-méthylimidazole comme ligand et, à titre de comparaison, le DRX théorique d'un ZIF-8.
Les figures 10, 11 et 12 illustrent le DRX d'un oxyde de zinc obtenu à partir des précipités récupérés respectivement à l'issue de trois extractions utilisant du 2-méthylimidazole comme ligand et, à titre de comparaison, le DRX théorique de l'oxyde de zinc.

### EXPOSÉ DÉTAILLÉ DE MODES DE MISES EN ŒUVRE PARTICULIERS

### EXEMPLE 1: Extraction du zinc d'une solution polymétallique par le benzimidazole et préparation d'un oxyde de zinc à partir du précipité récupéré

Cet exemple illustre la mise en oeuvre du procédé d'extraction de l'invention en utilisant comme ligand, le benzimidazole, représenté par la formule suivante :

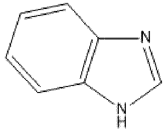

Pour ce faire, une solution polymétallique comprenant, outre du zinc, du manganèse ou un mélange de manganèse et de nickel est préparée en dissolvant des quantités adéquates des nitrates métalliques correspondants dans du méthanol ou des sulfates métalliques correspondants dans de l'eau distillée.

Du benzimidazole est ensuite ajouté à la solution polymétallique.

Le mélange ainsi obtenu est introduit dans un récipient de réaction en téflon^{™} et est chauffé à 40 °C, sous agitation, pendant 12 heures.

Il se forme ainsi un précipité qui est récupéré par filtration sous vide, conduisant à l'obtention d'une poudre.

Les trois extractions ci-dessous sont réalisées.

### ❖ Extraction 1: extraction du zinc à partir d'une solution bimétallique comprenant du nitrate de zinc et du nitrate de manganèse

La solution bimétallique comprend ici 1,963 g de nitrate de zinc et 1,657 g de nitrate de manganèse dans 30 mLde méthanol.

8,5 g de benzimidazole sont utilisés lors de cette extraction.

### ❖ Extraction 2 : extraction du zinc à partir d'une solution trimétallique comprenant du nitrate de zinc, du nitrate de manganèse et du nitrate de nickel

La solution trimétallique comprend ici 1,3264 g de nitrate de zinc, 1,192 g de nitrate de manganèse et 1,279 g de nitrate de nickel dans 30 mL de méthanol.

8,5 g de benzimidazole sont utilisés lors de cette extraction.

### ❖ Extraction 3 : extraction du zinc à partir d'une solution trimétallique comprenant du sulfate de zinc, du sulfate de manganèse et du sulfate de nickel

La solution trimétallique comprend ici 1,265 g de sulfate de zinc, 743,7 g de sulfate de manganèse et 1,156. g de sulfate de nickel dans 30 mL d'eau distillée.

8.5 g de benzimidazole sont utilisés lors de cette extraction.

La poudre récupérée à l'issue de ces trois extractions est ensuite analysée par ICP-OES. Cette analyse a permis de démontrer que le zinc a réagi de manière sélective avec le benzimidazole, vis-à-vis du manganèse et du nickel, et donc qu'une extraction sélective du zinc a été réalisée puisque :
- le précipité récupéré à l'issue de l'extraction 1 présente une pureté en zinc de 99,6 % ;
- le précipité récupéré à l'issue de l'extraction 2 présente une pureté en zinc de 99,3 % ; et
- le précipité récupéré à l'issue de l'extraction 3 présente une pureté en zinc de 98,4%.

Par ailleurs, la poudre est aussi analysée par DRX et les diffractogrammes obtenus sont comparés au diffractogramme théorique d'un ZIF-7-III.

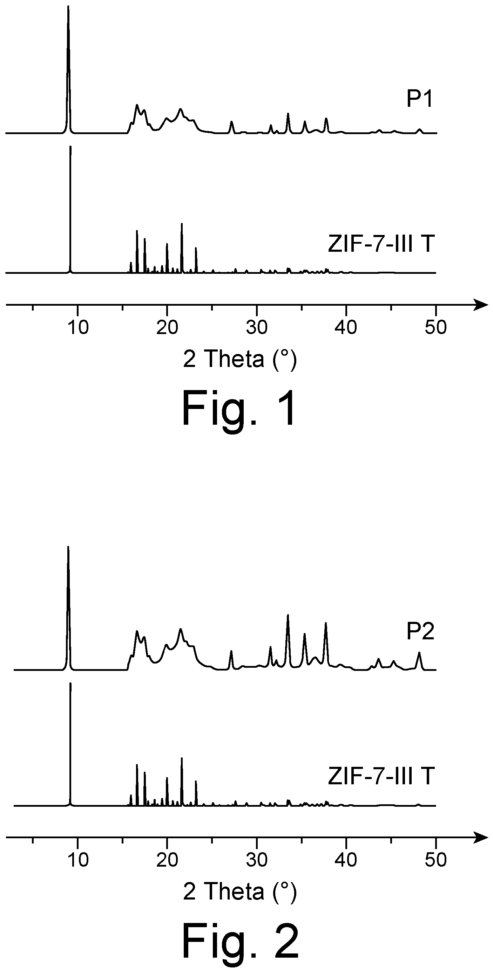

Ces diffractogrammes sont illustrés sur les figures 1, 2 et 3. Les diffractogrammes des précipités récupérés sont notés P1, P2 et P3 (respectivement pour précipité 1, 2 et 3) et le diffractogramme théorique du ZIF-7-III est noté ZIF-7-III T (pour théorique).

Comme le montre ces figures, les diffractogrammes des précipités récupérés et celui théorique d'un ZIF-7-III présentent le même pic caractéristique à 9,09°, ce qui confirme que les trois précipités correspondent au ZIF-7-III.

Les poudres subissent ensuite une analyse thermogravimétrique (ou dite ATG) jusqu'à 1 000 °C pendant 4 heures, puis les produits résultants sont analysés par DRX et les diffractogrammes obtenus sont comparés au diffractogramme théorique de l'oxyde de zinc.

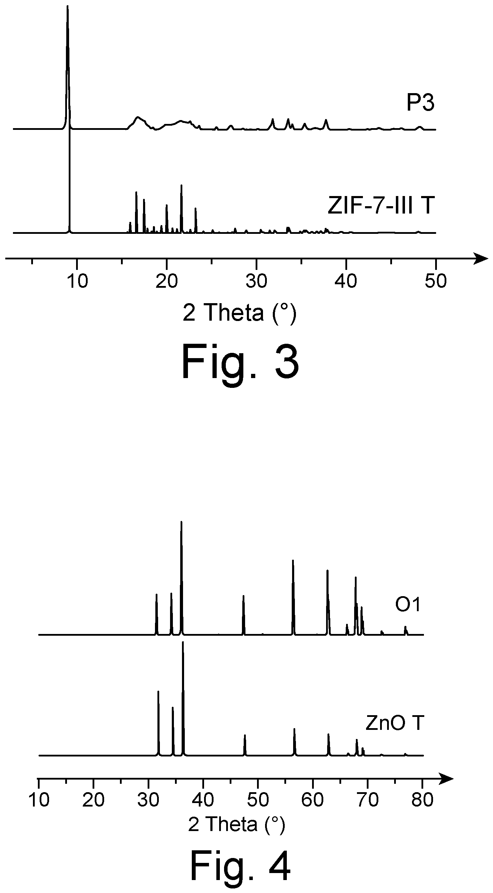

Ces diffractogrammes sont illustrés sur les figures 4, 5 et 6. Les diffractogrammes des oxydes de zinc obtenus à partir des précipités sont notés O1, O2 et O3 (respectivement pour oxyde 1, 2 et 3) et le diffractogramme théorique de l'oxyde de zinc est noté ZnO T.

Ces trois figures montrent que les diffractogrammes des oxydes de zinc obtenus à partir des précipités sont similaires à celui théorique de l'oxyde de zinc, ce qui démontre donc qu'il est possible d'obtenir de l'oxyde de zinc à partir du précipité obtenu à l'issue du procédé d'extraction de l'invention.

### EXEMPLE 2 : Extraction du zinc d'une solution polymétallique par le 2-méthylimidazole et préparation d'un oxyde de zinc à partir du précipité récupéré

Cet exemple illustre la mise en oeuvre du procédé d'extraction de l'invention en utilisant comme ligand, le 2-méthylimidazole représenté par la formule suivante :

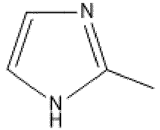

Pour ce faire, les mêmes modalités que celles décrites dans l'exemple 1 sont mises en oeuvre, à la différence toutefois que le mélange comprenant la solution polymétallique et le ligand est chauffé à 40 °C pendant 6 heures seulement.

Là encore, il se forme un précipité qui est récupéré par filtration sous vide, conduisant à l'obtention d'une poudre.

Les trois extractions ci-dessous sont réalisées.

### ❖ Extraction 4 : extraction du zinc à partir d'une solution bimétallique comprenant du nitrate de zinc et du nitrate de manganèse

La solution bimétallique comprend ici 0,892 g de nitrate de zinc et 0,753 g de nitrate de manganèse dans 30 mL de méthanol.

0,657 g de 2-méthylimidazole sont utilisés lors de cette extraction.

### ❖ Extraction 5 : extraction du zinc à partir d'une solution trimétallique comprenant du nitrate de zinc, du nitrate de manganèse et du nitrate de nickel

La solution trimétallique comprend ici 0,594 g de nitrate de zinc, 0,502 g de nitrate de manganèse et 0,580 g de nitrate de nickel dans 30 mL de méthanol.

0,657 g de 2-méthylimidazole sont utilisés lors de cette extraction.

### ❖ Extraction 6 : extraction du zinc à partir d'une solution trimétallique comprenant du sulfate de zinc, du sulfate de manganèse et du sulfate de nickel

La solution trimétallique comprend ici 0,575 g de sulfate de zinc, 0,338 g de sulfate de manganèse et 0,526 g de sulfate de nickel dans 30 mL d'eau distillée.

0,657 g de 2-méthylimidazole sont utilisés lors de cette extraction.

La poudre récupérée à l'issue de ces trois extractions est ensuite analysée par ICP-OES. Cette analyse a permis de démontrer que le zinc a réagi de manière sélective avec le 2-méthylimidazole, vis-à-vis du manganèse et du nickel, et donc, là encore, qu'une extraction sélective du zinc a été réalisée puisque :
- le précipité récupéré à l'issue de l'extraction 4 présente une pureté en zinc de 99,7 % ;
- le précipité récupéré à l'issue de l'extraction 5 présente une pureté en zinc de 99,6 % ; et
- le précipité récupéré à l'issue de l'extraction 6 présente une pureté en zinc de 99,0 %.

Par ailleurs, la poudre est aussi analysée par DRX et les diffractogrammes obtenus sont comparés au diffractogramme théorique d'un ZIF-8.

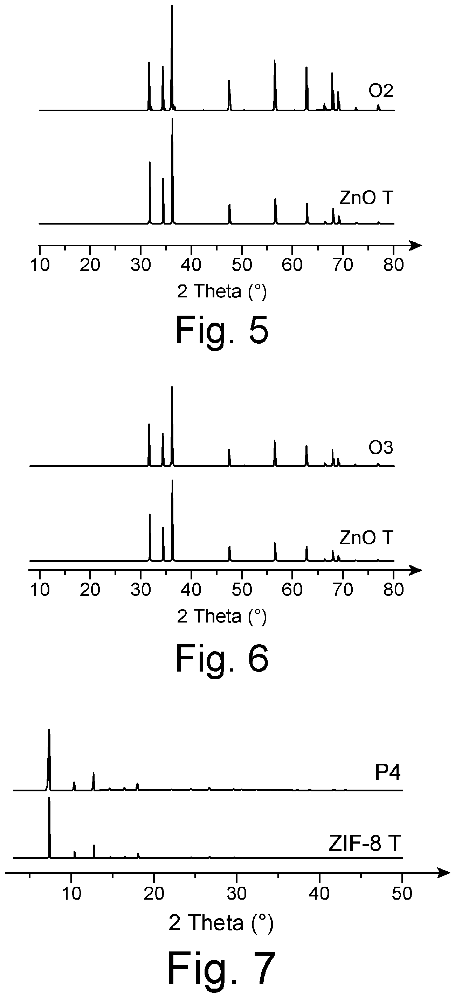

Ces diffractogrammes sont illustrés sur les figures 7, 8 et 9. Les diffractogrammes des précipités récupérés sont notés P4, P5 et P6 (respectivement pour précipité 4, 5 et 6) et le diffractogramme théorique du ZIF-8 est noté ZIF-8 T.

Comme le montre ces figures, les diffractogrammes des précipités récupérés et celui théorique d'un ZIF-8 présentent le même pic caractéristique à 7,3°, ce qui confirme que les trois précipités correspondent au ZIF-8.

Les poudres subissent ensuite une analyse ATG jusqu'à 1 000 °C pendant 4 heures, puis les produits résultants sont analysés par DRX et les diffractogrammes obtenus sont comparés au diffractogramme théorique de l'oxyde de zinc.

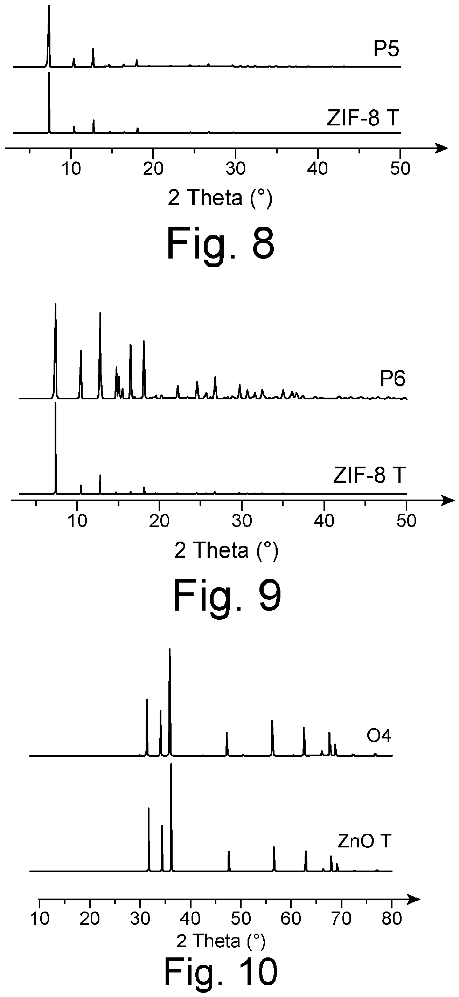

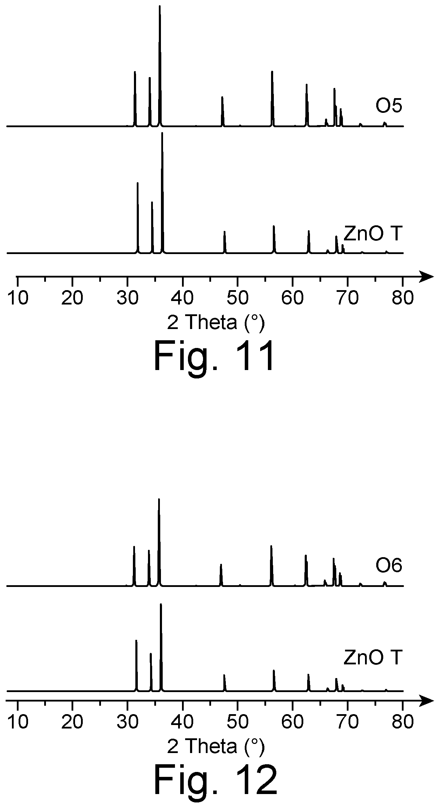

Ces diffractogrammes sont illustrés sur les figures 10, 11 et 12. Les diffractogrammes des oxydes de zinc obtenus à partir des précipités sont notés O4, O5 et O6 (respectivement pour oxyde 4, 5 et 6) et le diffractogramme théorique de l'oxyde de zinc est noté ZnO T.

Ces trois figures montrent que les diffractogrammes des oxydes obtenus à partir des précipités sont similaires à celui théorique de l'oxyde de zinc, ce qui démontre donc qu'il est possible d'obtenir de l'oxyde de zinc à partir du précipité obtenu à l'issue du procédé d'extraction de l'invention.

### RÉFÉRENCES CITÉES

**[1]** S. Rao et al., Hydrometallurgy 2019, 183, 38-44.
**[2]** W-S Chen et al., Energy Procedia 2017, 107, 167-174.

## Revendications

1. Procédé d'extraction du zinc à partir d'une solution S1 comprenant du zinc et au moins un élément métallique autre que le zinc et le cobalt, lequel procédé est **caractérisé en ce qu'**il comprend au moins les étapes suivantes :
a) réaction entre le zinc et au moins un ligand choisi parmi l'imidazole et ses dérivés par mise en contact de la solution S1 avec le(s) ligand(s), moyennant quoi un précipité à structure imidazolate zéolithique est obtenu ; et
b) récupération du précipité.

2. Procédé d'extraction selon la revendication 1, dans lequel le ou les éléments métalliques autres que le zinc et le cobalt sont des métaux de transition.

3. Procédé d'extraction selon la revendication 1 ou la revendication 2, dans lequel le ou les éléments métalliques autres que le zinc et le cobalt sont le manganèse et/ou le nickel.

4. Procédé d'extraction selon l'une quelconque des revendications 1 à 3, dans lequel le(s) ligand(s) répond(ent) à la formule (I) ci-après : 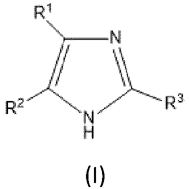 dans laquelle :
- R¹ et R² représentent, indépendamment l'un de l'autre, un atome d'hydrogène, un groupe alkyle linéaire ou ramifié en C₁ à C₄, un atome d'halogène, un groupe nitro ou un groupe amino, ou bien R¹ et R² forment ensemble un groupe phényle éventuellement substitué une ou plusieurs fois ; et
- R³ représente un atome d'hydrogène, un groupe alkyle linéaire ou ramifié en C₁ à C₄, un atome d'halogène, un groupe nitro ou un groupe amino.

5. Procédé d'extraction selon la revendication 4, dans lequel :
- R¹ et R² représentent, indépendamment l'un de l'autre, un atome d'hydrogène, un groupe méthyle, un groupe éthyle, un atome d'halogène, un groupe nitro ou un groupe amino, ou bien R¹ et R² forment ensemble un groupe phényle ; et
- R³ représente un atome d'hydrogène, un groupe méthyle, un groupe éthyle, un atome d'halogène, un groupe nitro ou un groupe amino.

6. Procédé d'extraction selon la revendication 4 ou la revendication 5, dans lequel :
- R¹ et R² représentent un atome d'hydrogène ou bien R¹ et R² forment ensemble un groupe phényle ; et
- R³ représente un atome d'hydrogène, un groupe méthyle ou un groupe éthyle.

7. Procédé d'extraction selon l'une quelconque des revendications 4 à 6, dans lequel le(s) ligand(s) sont choisis parmi :
- le ligand répondant à la formule (I) dans laquelle R¹ et R² forment ensemble un groupe phényle et R³ représente un atome d'hydrogène ; et
- le ligand répondant à la formule (I) dans laquelle R¹ et R² représentent tous les deux un atome d'hydrogène tandis que R³ représente un groupe méthyle.

8. Procédé d'extraction selon l'une quelconque des revendications 1 à 7, dans lequel le zinc, dans la solution S1, est sous la forme d'un sulfate, d'un nitrate ou d'un chlorure de zinc, de préférence, d'un sulfate ou d'un nitrate de zinc et, mieux encore, d'un sulfate de zinc.

9. Procédé d'extraction selon l'une quelconque des revendications 1 à 8, dans lequel, à l'étape a), le rapport molaire zinc/ligand(s) est compris entre 1/1 et 1/25.

10. Procédé d'extraction selon l'une quelconque des revendications 1 à 9, dans lequel, préalablement à l'étape a), une étape de détermination de la concentration en zinc dans la solution S1 est mise en oeuvre.

11. Procédé d'extraction selon l'une quelconque des revendications 1 à 10, dans lequel l'étape a) est réalisée sous agitation et à une température comprise entre 20 °C et 80 °C.

12. Procédé d'extraction selon l'une quelconque des revendications 1 à 11, dans lequel la solution S1 est issue de la lixiviation acide d'un matériau usagé comprenant du zinc et au moins élément métallique autre que le zinc et le cobalt.

13. Procédé de préparation d'un oxyde de zinc, comprenant les étapes suivantes :
i) une étape d'extraction du zinc à partir d'une solution S1 comprenant du zinc et au moins un élément métallique autre que le zinc et le cobalt, par la mise en oeuvre du procédé d'extraction selon l'une quelconque des revendications 1 à 12 ; puis
ii) une étape de calcination du précipité récupéré à l'issue de l'étape b) dudit procédé d'extraction.

14. Procédé de préparation selon la revendication 13, dans lequel l'étape ii) est réalisée sous une atmosphère oxydante et à une température comprise entre 600 °C et 1 000 °C.
